# EUROPEAN PATENT SPECIFICATION

(11) **EP 0 386 434 B1**
(45) Date of publication and mention of the grant of the patent: **17.02.1993**
(21) Application number: 90101573.5
(22) Date of filing: 26.01.1990
(51) Int. Cl.: B65D 19/38

(54) **Pallet storage system for storing cylindrical articles and pallet for use therein**
Paletton- Lagerungssystem und Palette zum Lagern zylindrischer Gegenstände
Système de stockage palettisé pour le stockage d'objets cylindriques et palette pour un tel usage

(30) Priority: 10.03.1989 US 321817
(43) Date of publication of application: 12.09.1990
(73) Proprietor: The Uniroyal Goodrich Tire Company, Akron Ohio 44397-0001 (US)
(72) Inventor: Kraus, Robert T., Akron Ohio 44313 (US)
(74) Representative: Hilleringmann, Jochen, Dipl.-Ing.

(56) References cited:
- DE-B- 1 044 715
- US-A- 4 403 556

## Description

This invention relates, in general, to the storage of cylindrical or toroidal articles and relates, in particular, to a storage system designed for the efficient and effective storage of stacks of tires.

Various cylindrical or toroidal articles are commonly stored on pallets which are, in turn, then stored in warehouses. By way of example, vehicular tires are commonly warehoused for various reasons. Millions of tires may be warehoused at any given time, and such storage required the utilization of costly warehouse space. The efficient use of such space is therefore a highly desirable objective.

Conventionally, tires are often stored by stacking them on flat pallets with vertically disposed riser tubes inserted into the centers of the stacks for stability. Another style of pallet also commonly utilized includes vertical restraining members such as integral pipe or square tubing disposed on the peripheries of the pallets and with the tires being stacked within the frame formed by the restraining members. In either case, similar pallets may then be stacked one upon the other so as to utilize the available cubic storage space to its utmost.

The optimum number of articles such as tires of a given diameter, for example, which can be stored in a given space using prior art systems can be readily calculated. Just by way of example, one pallet commonly used is square in planar configuration, measuring 152.4 cm by 152.4 cm (60 inches by 60 inches). For tires with diameters less than 63.14 cm (24.86 inches), five stacks can be placed on the pallet without the stacks of tires overhanging the edge of the pallet. The area occupied by these tires would be 152.4 cm by 152.4 cm or 23,225.76 cm² (60 inches by 60 inches or 3600 square inches). For diameters greater than (63.14 cm (24.86 inches), five stacks can be placed on the pallet, but the tires will overhang the edge of the pallet and require a larger rectangular area with the sides equal to the diameter times a constant (approximately 2.41). For tires with diameters greater than 68.58 cm (27 inches), only four stacks of tires can be placed on the pallet. These tires would occupy an area again of 3600 square inches. For tires greater than 76.2 cm (30 inches) in diameter, the stacks will overhang the pallet and a rectangular area with sides of 2 times the tire diameter would be required.

In all of these cases, the stacks of tires are typically 6 to 9 tires high on a pallet. Pallets are stacked five high by using cardboard tubes or vertical restraining members as previously mentioned.

Computations can be made for tires of varying sizes with the point being that, with any storage system, a finite number of tires can be effectively stored in a given space and it is an object of this invention to provide a system which will increase the capacity of such storage space.

By way of further background, the patent prior art illustrates several versions of essentially square or rectangular pallets of the type just described and used for storing tires, drums, pipes or similar cylindrical or toroidal articles. One example for such square or rectangular pallets is disclosed in DE-B-1 044 715.

U.S. Patent 3,012,663 shows a tire storage pallet utilizing a conventional square pallet configuration with internal columns or riser tubes. U.S. Patent 3,265,224 is of general interest, showing a four stack pallet for tires with stack stabilizers, while U.S. Patent 4,290,370 is of some interest in showing a six stack pallet load. U.S. Patent 3,431,870 discloses a trapezoidal pallet intended to store three cylindrical articles, again such as shipping drums.

Also of general interest are U.S. Patents 2,594,287, 4,051,786, 4,118,855 and 4,208,971. These patents generally relate to means for securing the articles on the pallets which are then presumably arranged in conventional fashion.

In addition to the foregoing, attempts have been made to maximize the utilization of storage space for articles having configurations similar to those referred to in this application. Examples of such patent prior art can be seen, for example, in U.S. Patent 3,710,732, which discloses a T-shaped pallet, or one having a curvilinear shape, which is employed for the storage of cylindrical drums to more efficiently utilize the available storage space.

U.S. Patent 3,834,323 shows an open frame type pallet for storage of drums, and also employs a generally T-shaped arrangement for a three drum array.

U.S. Patent 4,403,556 is also of similar interest in that it discloses an essentially hexagonal pallet or platform, also designed for the storage of drums and wherein the same are compactly arrayed, as can be seen in the drawings.

While tires and similarly configured articles have been stored for years using square pallets and arranging the pallets in stacks and by using other configurations, as just described by way of example, there is some question as to whether any of the known systems make optimum use of available space.

Thus, it is believed that while the prior art just referred to may be suitable for the purposes for which it is designed, a more efficient storage system and pallet design and concept can be achieved by providing a pallet having a unique planar configuration which will permit adequate support for the tires or other objects stored thereon, but will provide maximum improved efficient usage of the storage space available and thereby reduce the space required to store a given number of articles with a readily apparent corresponding reduction in cost. Production of unique pallets and use of them in an orderly system thus becomes the principal object of this invention.

It is the object of the invention to provide a pallet storage system for supporting cylindrical or toroidal articles and a pallet for use therein which can reduce needed floor space.

This object is solved by the pallet according to claim 1 and by the pallet storage system according to claim 7, respectively.

It has been found that the use of the pallet storage system and the pallets according to the invention can reduce needed floor space by approximately ten percent or more. The actual reduction is dependent on: the diameter distribution of the inventory of articles stored, the number of improved pallet sizes utilized, and warehousing practice such as the amount of clearance between rows of pallets. A sample calculation, using one pallet size, equivalent warehousing practice, and an actual tire inventory shows a 11.42 percent increase in density. The economic ramifications of such an increase will be readily apparent.

The improved pallet storage system can be produced by utilizing a reversible, double-faced pallet with substantially parallel side edges and substantially parallel front and back edges. The pallet, moreover, has a recessed tail area extending inwardly from its rear edge and a projecting nose area extending outwardly from its front or leading edge, so as to accommodate the optimum number of tires or other articles with adequate support over a wide range of sizes and so that adjacent pallets can nest with each other for more efficient usage of the floor space.

It has also been found that by providing the recessed area with tapering walls and the projecting nose with complementary tapering walls, nesting is enhanced and alignment problems are minimized.

It has further been found that the uniquely designed pallets can be physically sized using simple calculations to yield the preferred dimensions for a supply of pallets that correspond to the diameter of the articles. Thus, where the article diameter is D, the distance from the rear edge to the front or leading edge of the pallet will be about 2D and the distance between the side edges will be about 2.75D. The nose will project about 0.5D and such dimensions will provide a pallet on which a layer of articles may be placed in circumferential abutment with each other and with the tires adjacent the lateral edges of the pallet tangential with the planes of the side edges.

Where a range of article sizes must be accommodated, the storage system of this invention permits one to calculate and employ the physical sizes of the pallets which again maximize efficient use of floor space. For example, given a population of different tire sizes and diameters, the physical size of a pallet is based on D, the diameter of a given tire. However, the unique pallet design permits efficient stacking of tires on this pallet for tires having diameters ranging from D to 1.15 times D. Hence, for one physical pallet size, the inventive storage system efficiently accommodates all tires having a diameter within the range of D to 1.15D. For tires having a diameter beyond 1.15D, the physical size of the next series of pallets would be based on D, and pallets sized as such can then efficiently store all tires having a diameter from D′ to 1.15D′. This method can be repeated as often as necessary so that the uniquely designed pallet can be physically sized to produce an efficient storage system for the entire population of tire sizes. Each pallet size would differ from the other by about 15% in dimensions, so that, if, for example, the ranges of tire diameters from smallest to largest was about 60%, then four pallets, each having the unique design but each of a select physical size, would provide maximum utilization of the storage space.

It has been found that any range may be accommodated by providing a system comprising a series of pallet sizes, each increased in size by about 15%, as noted. However, where economic or other reasons preclude maintaining a stock of pallets of multiple sizes, the optimal size may be determined by utilizing a weighted average to ascertain dimension D.

Accordingly, production of an improved pallet storage system for supporting cylindrical objects and a pallet for use therein of the character above described becomes the principal object of this invention with further objects thereof becoming more apparent upon a reading of the following brief specification considered and interpreted in view of the accompanying drawings.

FIGURE 1 is a perspective view of the improved pallet.

FIGURE 2 is a top plan view thereof.

FIGURE 3 is a top plan view of the pallet of the present invention showing six tires of the smaller size (D) described herein in place thereon.

FIGURE 4 is a top plan view of the pallet of this invention showing six tires of the larger size (1.15D) described herein in place thereon.

FIGURE 5 is a partially schematic top plan view showing the nesting of two adjacent pallets carrying the smaller size (D) tires.

FIGURE 6 is a partially schematic top plan view showing the nesting of two adjacent pallets bearing the larger size (1.15D) tires described herein.

Before describing the invention in detail, it should be noted that the following specification and the drawings will refer to the storage of tires for ease of illustration and simplicity of description. However, the invention is not intended to be so limited and is believed to have utility with respect to a wide variety of articles that can be projected into a plane with the projection having an approximately circular perimeter.

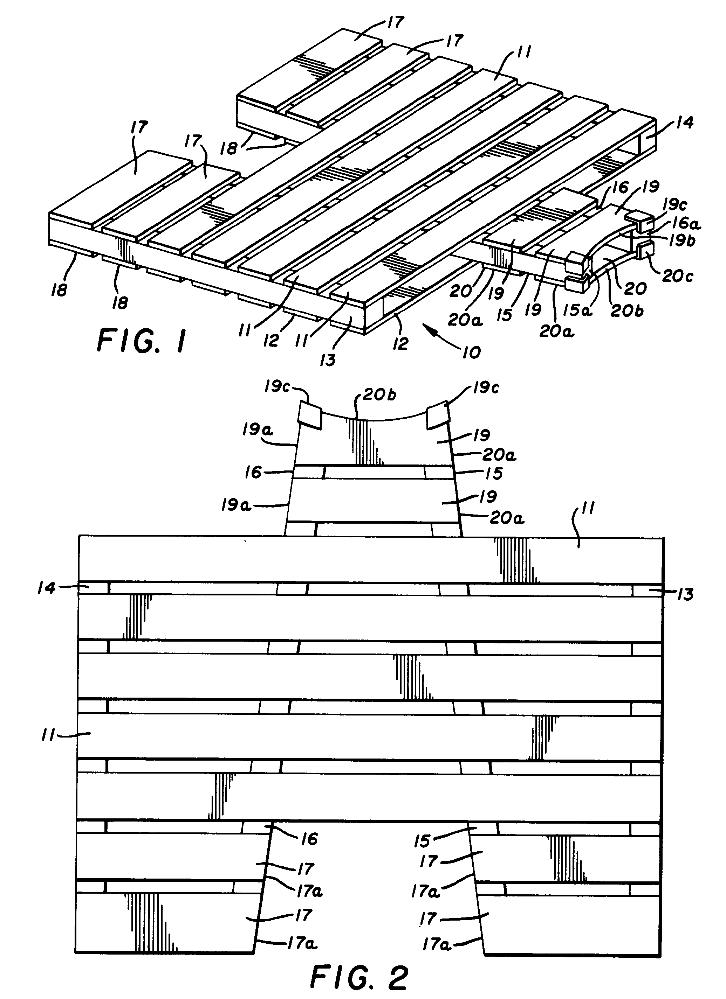

Referring first then to FIGURE 1 of the drawings, it will be seen that the pallet, generally indicated by the numeral 10, is a pallet of the reversible type so that it has utilization regardless of which deck boards are in contact with a supporting surface. Thus, for purposes of illustration and description, Applicant will refer to top deck boards and bottom deck boards, but, in the form of the invention illustrated, the reversibility of the pallet should be kept in mind. However, as will be noted subsequently, the inventive concept does not necessarily require reversibility.

Still referring to FIGURE 1 then, it will be seen that the pallet comprises a plurality of top main deck boards 11,11 and a plurality of bottom main deck boards 12,12. These boards are secured to outer risers 13 and 14 which, as can be seen in FIGURE 2 of the drawings, are essentially disposed in parallel, spaced relationship.

The deck boards 11,11 and 12,12 span the distance between the risers 13 and 14, or from side to side of the pallet, and can be secured thereto by any suitable means, such as nailing, gluing, stapling, etc.

Disposed inboard from or between the outer stringers 13 and 14 are inner stringers 15 and 16. These stringers extend (see FIGURE 2) from the rear edge to the leading edge of the pallet and beyond. In that regard, for purposes of reference, the end of the pallet to the right of FIGURE 1 will be referred to as the front or leading edge and the end to the left of FIGURE 1 as the rear edge.

The inner stringers 15 and 16 are disposed at an angle with respect to the longitudinal center line of the pallet so that their widest spacing is at the rear edge of the pallet 10 and their forward ends 15a, 16a converge toward each other as they extend toward and past the leading edge of the pallet.

At the rear of the pallet, top tail deck boards 17,17 are secured to both the risers 13 and 14 and the risers 15 and 16. These span the distance between the risers 13 and 15 on the one hand and 14 and 16 on the other and are attached thereto as just noted with regard to main deck boards 11 and 12. As can be seen in FIGURE 2, the inner edge surface of the top tail deck boards are cut at an angle as indicated at 17a,17a so as to conform to the edges of the inner risers 15 and 16.

At the front or leading edge of the pallet 10, the risers 15 and 16 also support top nose deck boards 19,19 and bottom nose deck boards 20,20. These are again secured to the risers 15 and 16 by any suitable means, as already described. Furthermore, the outer edge surfaces 19a,19a and 20a,20a are cut at an angle so as to be flush with the plane of the outer edge of the risers 15 and 16, as can be clearly seen in FIGURE 2 of the drawings.

The forwardmost top and bottom nose deck boards 19 and 20 also have a concave edge surface indicated at 19b and 20b. The purpose of this configuration will be described more fully below. It is also possible to cap the pointed edges of the nose as at 19c,19c and 20c,20c with protective members to protect against damage since such damage may reduce the effectiveness of the invention, as will become apparent.

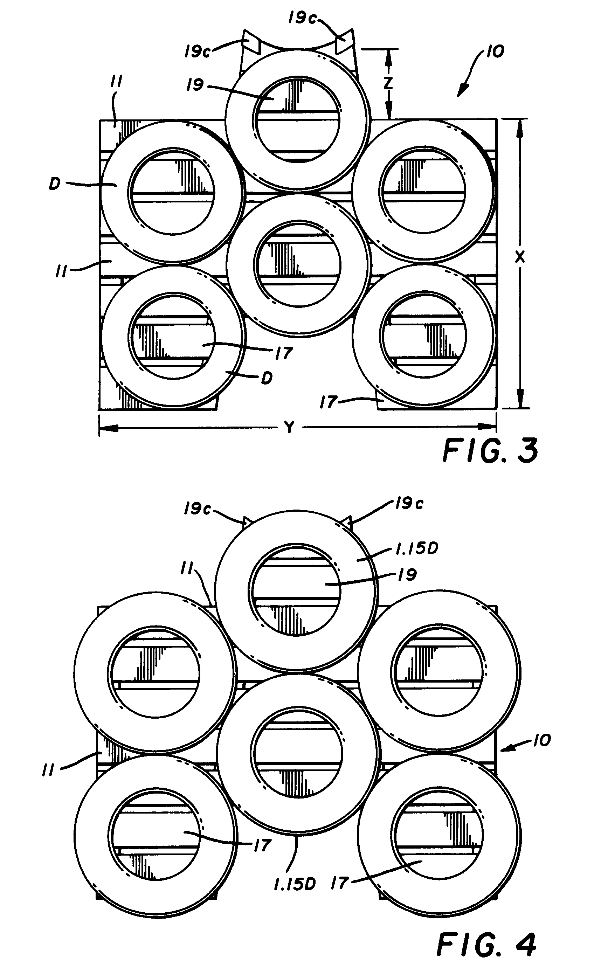

Turning next to FIGURES 3 and 4 of the drawings, it will be seen that a typical pallet 10 will support six stacks of tires, ranging from a smaller type identified as D to a larger type designated as 1.15D. While the invention is not intended to be limited to any particular absolute dimensions or to the storage of any particular size, for purposes of illustration, the small tires D may be those with a diameter of approximately 66.04 cm (26 inches), while the large tire 1.15D may be those with a diameter of approximately 73.91 cm (29.1 inches). Tires having a diameter ranging from D to 1.15D will be efficiently stored on this pallet. Larger or smaller diameter tires could also be stored on a pallet dimensioned for this size range, although some sacrifice in efficiency may result unless a second pallet size is also selected, as will be described.

One of the objects of the invention is to provide for "perfect nesting" of the stored tires. By perfect nesting, Applicant intends that the pallet is configured and dimensioned so that, for a given range of tire sizes, the tires of each layer will be in circumferential abutment with one or more other tires in the layer and at least tangent to the edges of the pallet. In this way, when pallets are adjacent each other, the points of interference are the articles and not the pallets.

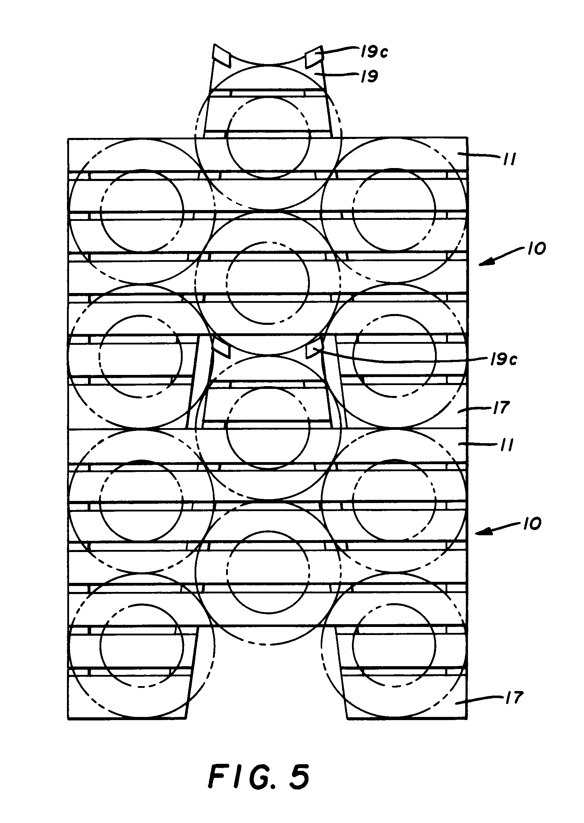

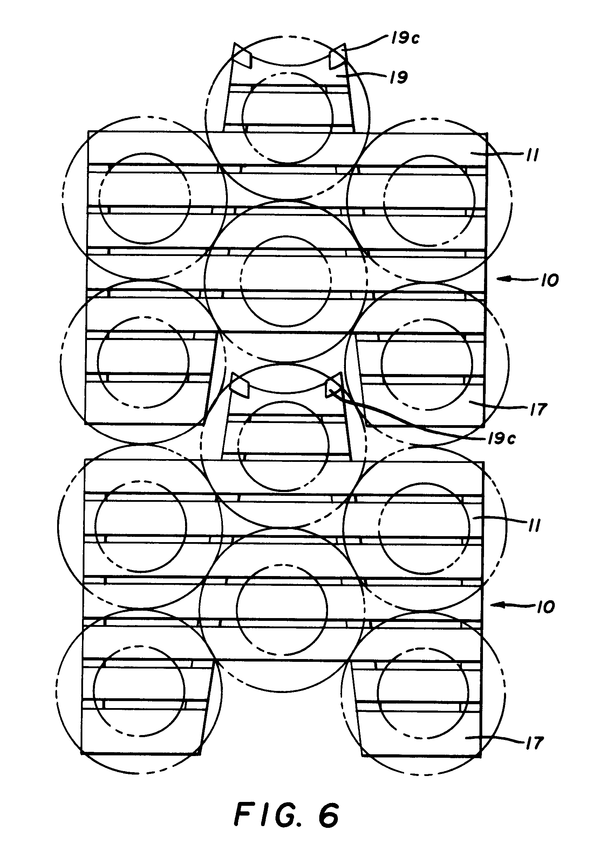

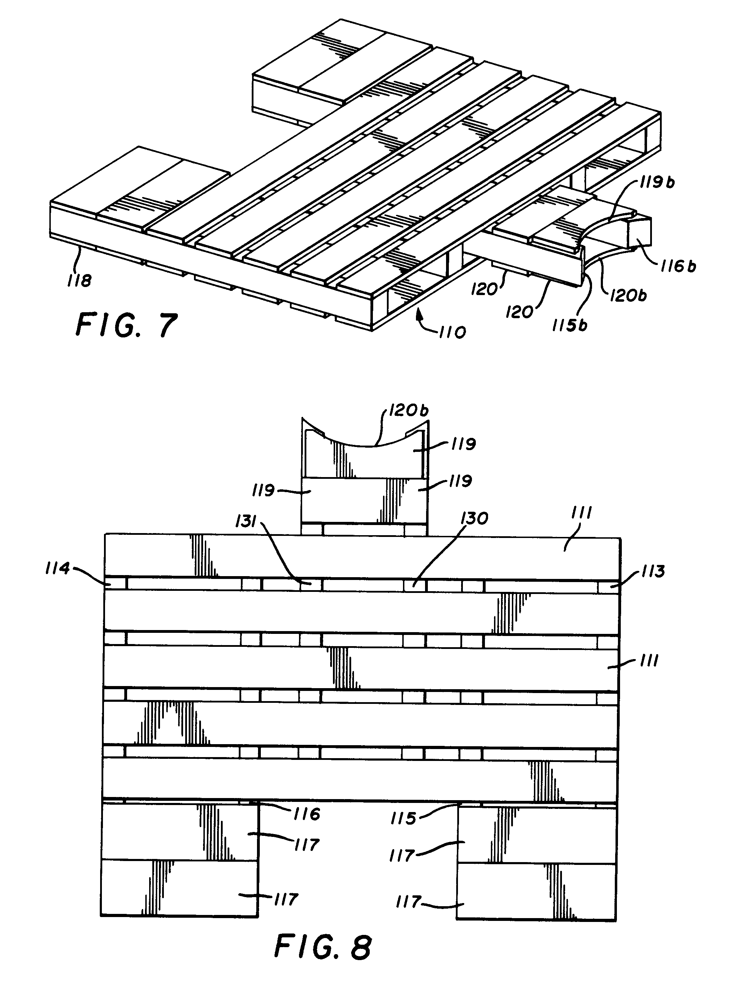

In that regard, normal storage practice is to leave some small space between laterally adjacent pallets for ease of manipulation. Therefore, Applicant's reference to adjacent pallets connotes front-to-rear adjacency as illustrated in FIGURES 5 and 6.

Referring again, then, to FIGURES 3 and 4 of the drawings, it will be seen that six layers of tires of the range of diameters D to 1.15D can be efficiently stored on each pallet illustrated. The tires are in circumferential abutment with each other in both instances and at least tangential to the outer edges of the pallets. With the smaller tires D, these tires are essentially confined within the perimeter of the pallet and entirely supported on the pallet surface, resting on the top deck boards 11, 11, 17 and 19.

With regard to the larger tires 1.15D, these tires again are essentially fully supported in all important aspects on the deck boards 11, 11, 17 and 19 and are in circumferential abutment with each other. In that regard, it should be noted that, in a typical tire, the circumferential area of the sidewall is the breaker area. These breakers act as a beam and, due to the relative dimensions of the larger tires 1.15D and the pallet 10, in FIGURE 4 of the drawings, the five outer tires overhang the edge of the pallet, but are supported in the breaker area and, therefore, multiple tires can be stacked in each stack with the stack being stably supported by the pallet itself through the beam-like breakers. It is also with this in mind that the corners of the nose may be protected by caps 19c,19c, so as to avoid damage to the corners and insure support for the forwardmost tire in the breaker area.

To arrive at a suitable pallet size to achieve perfect nesting for a range of tire sizes, the range must first be determined. Optimally, if the diameter of the smallest tire is D, and the diameter of the largest tire is 1.15D, tires falling within this range may be stored achieving maximum density on a pallet dimensioned as follows. Thus, and referring to FIGURE 3, the dimension X, from the leading edge to the rear edge, will be about 2D. The dimension Y, from side to side, will be about 2.75D. Finally, the dimension Z, from the leading edge to a line extended from the apex of arcuate area 20b, will be about 0.5D.

D size tires fit perfectly on a pallet dimensioned as just described, as can be seen in FIGURE 3 where the tires are in circumferential abutment with each other and where the outermost rows are tangent to the planes of the side, rear and leading edges.

1.15D size tires overhang, as shown in FIGURE 4. However, they are all adequately supported in the breaker area as has been explained.

As can be seen in FIGURE 5 of the drawings, with the smaller tires D, it is possible to store six tires efficiently on the pallet and then nest the pallet with another pallet, thereby obtaining optimum usage of the available storage space. In other words, the nose on the leading edge of one pallet will fit into the recessed area in the rear edge of the tail of the other pallet. The angular or tapered nature of the nose and recessed area makes this possible without requiring tedious or difficult alignment maneuvers.

FIGURE 6 illustrates nesting with the larger diameter tire 1.15D wherein, while the front and rear edges of the pallets do not abut, the tires do abut and are efficiently supported and optimum usage of the space is achieved.

Tires larger than the 1.15D diameter stored on a pallet of the relative size of that illustrated in FIGURE 4 of the drawings will not nest in the fashion illustrated. Three tires only can be stored, thereby reducing efficiency.

While this may not present a serious problem, if a substantial part of the typical inventory is likely to fall above the 1.15D end of the range, a different pallet size is called for. The storage system of this invention readily permits one to design and utilize a second pallet size based on a tire having a diameter of D′. Hence, a second population of tires having diameters ranging from D′ to 1.15D′ can be efficiently stored using the present invention. This can be repeated as many times as needed to design pallets based on D′ dimensions (or D˝ and so on) and thereby obtain pallet sizes that cover the population of tires from the smallest to the largest diameter tires. The size range of the tires from D to D′ should be about 15% (although it can be greater) to use the system most effectively.

Similarly, with tires smaller than the D diameter, the arrangement in FIGURE 3 is still possible, although here there still would be only six tires supported on the pallet and the result will be less than the "perfect" nesting referred to above. Again, if a substantial part of the typical inventory is likely to fall below the D end of the range, a new pallet size can be accommodated by redesign as just described.

Thus, as previously noted, it is contemplated that the pallet dimensions of a typical system would be determined by the diameter profile of the inventory to be accommodated. In other words, the relative dimensions of the pallets illustrated in the drawings are those which are most efficient for a given inventory diameter profile, which is the distribution of diameters in a given inventory and wherein the bulk of the tires to be stored are between D and 1.15D in diameter. If the inventory were otherwise, a different pallet size would bring optimum results.

In that regard, if economically feasible, it may be desirable, where the diameter profile at the storage site fluctuates, to stock a series of sizes of pallets. Thus, starting with a base size range D to 1.15D, each successive pallet would be increased in size by about 15% to thereby accommodate a wide variation in ranges.

The improved pallet storage system has previously been indicated as increasing density in a typical, and actual, situation by 11.42 percent, as illustrated in the following table:

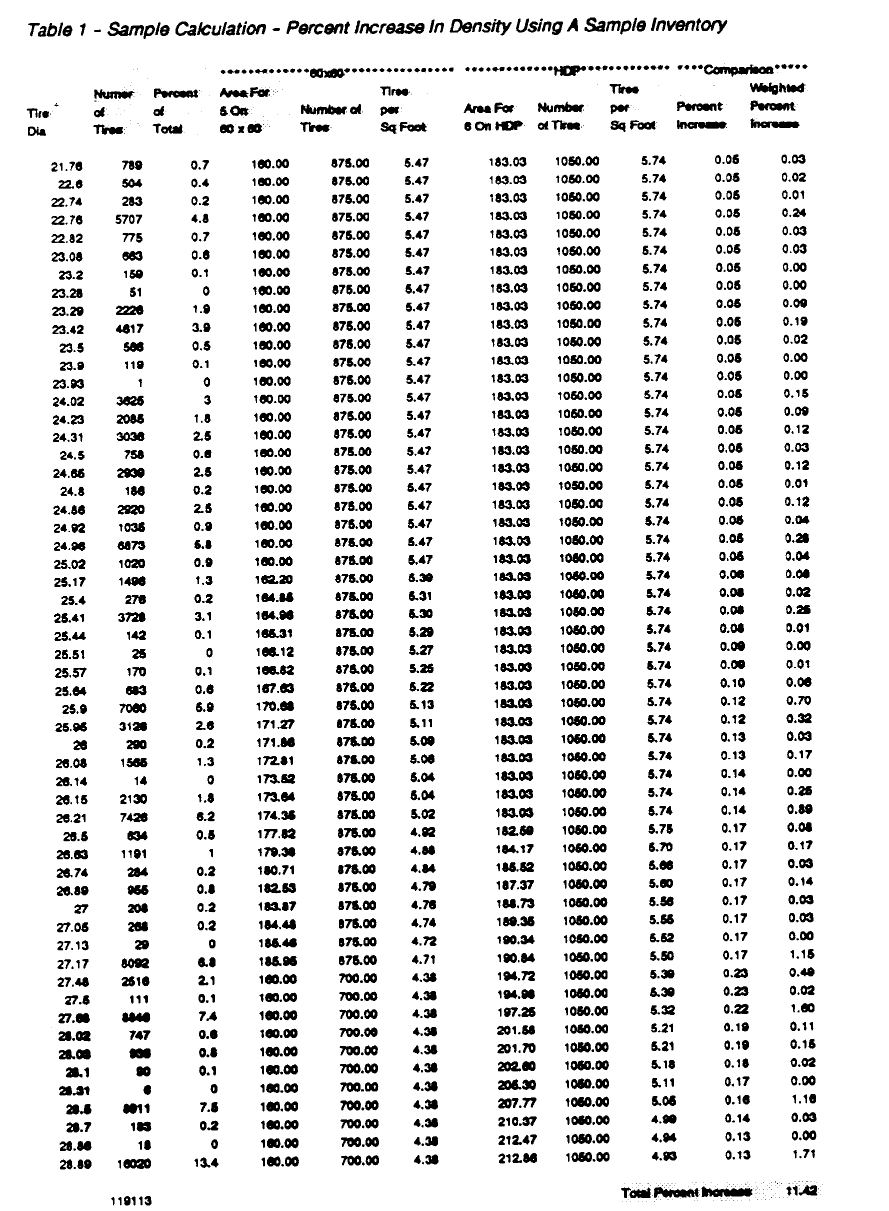

For purposes of preparing this table, which illustrates a typical gain in density using the high density pallet (HDP), an area equal to one-half the width of the access aisle times the required pallet opening width has been included in the density calculation. Also, normal warehouse practice includes a clearance between openings for rows of pallets. In preparing the table, a zero clearance was used in the calculations and it should be noted that this actually tends to understate the density increase because the typical 152.4 cm by 152.4 cm (60 inch by 60 inch) pallets would require more of these clearance for the pallets stored.

Finally, a five pallet row depth was used in the calculations. Again, this tends to understate the density increase since greater row depths, which are often used, would result in a greater density increase.

It is readily apparent from this table that significant savings can be achieved utilizing the inventive concept.

While a full and complete description of the invention has been set forth in accordance with the dictates of the Patent Statutes, is should be understood that modifications can be resorted to without departing from the spirit hereof or the scope of the appended claims.

Thus, as already has been noted, no precise dimensions as to the size of the pallets have been given, since that would be dictated by the size population of the universe of tires to be stored in a given facility. As has been mentioned, the pallet size chosen is the one which gives the optimum density increase. However, the principle of the nesting of the pallets would remain constant regardless of the relative size thereof.

Additionally, while reference has been made herein to "boards", it will be understood that the pallet 10 could be constructed of any suitable material having the strength requirements to support the articles to be supported thereon.

It will also be understood that only a base layer of tires has been illustrated. For example, and as previously mentioned, as is well-known in the trade, the tires can receive riser tubes and the pallets may be stacked vertically. This structure and arrangememt have been eliminated from the drawings for ease of illustration. Of course, when the pallets are thus stacked, the lower deck boards of a given pallet will rest on the top of risers rather than on the floor and the reversible nature of the embodiment illustrated provides the necessary surface area.

Also, as has been noted, the pallets have been illustrated and described as being reversible with opposed top and bottom deck boards. The inventive principles of the invention could also, however, be utilized with a pallet without a full lower deck where pallets having peripherally disposed, vertically extending restraining means are employed.

Finally, it will be noted that while the projecting nose has been illustrated as tapering as has the recess in the rear edge, it may be feasible to provide for an enlarged recess having straight walls and a reduced width nose also having straight walls. In this way, nesting and alignment will still be facilitated.

## Claims

1. Pallet for supporting cylindrical or toroidal articles, comprising
- a deck (11,17) for supporting the articles and having a planar configuration with parallel opposed side walls and opposed first and second ends, and
- means (13,14,15,16) secured to and disposed beneath said article supporting deck (11,17) for supporting the same with respect to a floor or the like,
characterized in that
- said first end of said supporting deck (11,17) is provided with a centrally disposed projecting portion (19) projecting beyond said first end and being designed to at least partially support an article,
- said second end of said object supporting deck (11,17) is provided with a centrally disposed recess,
- with said recess being at least as large as said projecting portion (19).

2. Pallet according to claim 1, characterized in that said centrally disposed projecting portion (19) has opposed side edges (19a,20a) which converge as they project from said first end.

3. Pallet according to claim 1 or 2, characterized in that said centrally disposed projecting portion (19) terminates in a cylindrical plane (20b).

4. Pallet according to any one of claim 1 to 3, characterized in that said centrally disposed recess tapers from a maximum width at said second end of said article supporting deck (11,17) to a minimal width inboard thereof.

5. Pallet according to any one of claim 1 to 4, characterized in that reinforcing caps (19c) are disposed on the projecting portion of said first end of said article supporting deck (11,17).

6. Pallet according to any one of claim 1 to 5, characterized in that said second end has a length dimension approximating two and three quarters diameter of an article to be supported, the distance from said first end to said second end of said article supporting deck (11,17) approximates two diameters of the article to be supported, and said centrally disposed projecting portion projects from said first end of said article supporting deck (11,17) a distance approximating one half the diameter of the article to be supported.

7. System for the storage of cylindrical or toroidal articles, comprising
- at least two article supporting pallets (10),
- each of said pallets (10) comprising
- a deck (11,17) for supporting the articles and having a planar configuration with parallel opposed side walls and opposed first and second ends, and
- means (13,14,15,16) secured to and disposed beneath said article supporting deck (11,17) for supporting the same with respect to a floor or the like,
characterized in that
- each of said pallets (10) is provided with
- a projecting portion (19) centrally disposed at the first end of the article supporting deck (11,17), said projecting portion (19) projecting beyond the first end and being designed to at least partially support an article, and
- a recess centrally disposed at the second end of the article supporting deck for receiving the projecting portion (19) of an adjacent pallet (10).

8. System according to claim 7, characterised in that it comprises at least two sets of pallets graduated is size from smallest to largest and in that a succeeding set of pallets (10) is about 15% larger in planar dimension than the preceding set of pallets (10).

9. System according to claim 7, characterized in that said centrally disposed projecting portion (19) has opposed side edges (19a,20a) which converge as they project from said first end.

10. System according to claim 7 or 8, characterized in that said centrally disposed projecting portion (19) terminates in a cylindrical plane (20b).

11. System according to any one of claim 7 to 10, characterized in that said centrally disposed recess tapers from a maximum width at said second end of said article supporting deck (11,17) to a minimal width inboard thereof.

12. System according to any one of claim 7 to 11, characterized in that reinforcing caps (19c) are disposed on the projecting portion of said first end of said article supporting deck (11,17).

13. System according to any one of claim 7 to 12, characterized in that said second end has a length dimension approximating two and three quarters diameter of an article to be supported, the distance from said first end to said second end of said article supporting deck (11,17) approximates two diameters of the article to be supported, and said centrally disposed projecting portion projects from said first end of said article supporting deck (11,17) a distance approximating one half the diameter of the article to be supported.

## Patentansprüche

1. Palette zum Tragen zylindrischer oder ringförmiger Artikel, mit
- einem zum Tragen der Artikel vorgesehenen, planar ausgebildeten Deck (11,17) mit einander gegenüberliegenden parallelen Seitenwänden und einander gegenüberliegenden ersten und zweiten Enden, und
- Einrichtungen (13,14,15,16), die an dem Artikeltragdeck (11,17) befestigt und unter diesem angeordnet sind, zum Tragen des Decks (11,17) in bezug auf einen Boden oder dgl.,
**dadurch gekennzeichnet**, daß
- das erste Ende des Tragdecks (11,17) mit einem mittig angeordneten vorstehenden Teil (19) versehen ist, der über das erste Ende vorsteht und zum zumindest teilweisen Tragen eines Artikels vorgesehen ist,
- wobei das zweite Ende des Artikeltragdecks (11,17) eine mittig angeordnete Ausnehmung aufweist,
- und die Ausnehmung mindestens so groß wie der vorstehende Teil (19) ist.

2. Palette nach Anspruch 1, dadurch gekennzeichnet, daß der mittig angeordnete vorstehende Teil (19) einander gegenüberliegende Seitenränder (19a,20a) aufweist, die mit zunehmendem Abstand von dem ersten Ende konvergieren.

3. Palette nach Anspruch 1 oder 2, dadurch gekennzeichnet, daß der mittig angeordnete vorstehende Teil (19) in einer zylindrischen Ebene (20b) endet.

4. Palette nach einem der Ansprüche 1 bis 3, dadurch gekennzeichnet, daß die mittig angeordnete Ausnehmung sich von einer maximalen Breite an dem zweiten Ende des Artikeltragdecks (11,17) zu einer minimalen Breite zum Inneren des Artikeltragdecks (11,17) hin verjüngt.

5. Palette nach einem der Ansprüche 1 bis 4, dadurch gekennzeichnet, daß Verstärkungskappen (19c) an dem vorstehenden Bereich des ersten Endes des Artikeltragdecks (11,17) angeordnet sind.

6. Palette nach einem der Ansprüche 1 bis 5, dadurch gekennzeichnet, daß das zweite Ende eine Längendimension aufweist, die näherungsweise das 2 3/4 -fache des Durchmessers eines zu tragenden Artikels beträgt, daß der Abstand von dem ersten Ende zu dem zweiten Ende des Artikeltragdecks (11,17) näherungsweise das Zweifache des Durchmessers des zu tragenden Artikels beträgt, und daß der mittig angeordnete vorstehende Teil von dem ersten Ende des Artikeltragdecks (11,17) um einen Abstand vorsteht, der näherungsweise die Hälfte des Durchmessers des zu tragenden Artikels beträgt.

7. System zur Lagerung zylindrischer oder ringförmiger Artikel, mit
- mindestens zwei Artikeltragpaletten (10),
- wobei jede der Paletten (10) aufweist:
- ein zum Tragen der Artikel vorgesehenes, planar ausgebildetes Deck (11,17) mit einander gegenüberliegenden parallelen Seitenwänden und einander gegenüberliegenden ersten und zweiten Enden, und
- Einrichtungen (13,14,15,16), die an dem Artikeltragdeck (11,17) befestigt und unter diesem angeordnet sind, zum Tragen des Decks (11,17) in bezug auf einen Boden oder dgl.,
**dadurch gekennzeichnet**, daß
- jede der Paletten (10) aufweist:
- einen an dem ersten Ende des Artikeltragdecks (11,17) mittig angeordneten vorstehenden Teil (19), der über das erste Ende vorsteht und zum zumindest teilweisen Tragen eines Artikels vorgesehen ist,
- eine an dem zweiten Ende des Artikeltragdecks mittig angeordnete Ausnehmung zur Aufnahme des vorstehenden Teils (19) einer benachbarten Palette (10).

8. System nach Anspruch 7, dadurch gekennzeichnet, daß das System mindestens zwei Sätze von Paletten aufweist, deren Abmessungen von der kleinsten zu der größten Abmessung zunehmen, und daß ein nachfolgender Satz von Paletten (10) in der Ebenenbemessung um etwa 15% größer ist als der vorausgehende Satz von Paletten (10).

9. System nach Anspruch 7, dadurch gekennzeichnet, daß der mittig angeordnete vorstehende Teil (19) einander gegenüberliegende Seitenränder (19a,20a) aufweist, die mit zunehmendem Abstand von dem ersten Ende konvergieren.

10. System nach Anspruche 7 oder 8, dadurch gekennzeichnet, daß der mittig angeordnete vorstehende Teil (19) in einer zylindrischen Ebene (20b) endet.

11. System nach einem der Ansprüche 7 bis 10, dadurch gekennzeichnet, daß die mittig angeordnete Ausnehmung sich von einer maximalen Breite an dem zweiten Ende des Artikeltragdecks (11,17) zu einer minimalen Breite zum Inneren des Artikeltragdecks (11,17) hin verjüngt.

12. System nach einem der Ansprüche 7 bis 11, dadurch gekennzeichnet, daß Verstärkungskappen (19c) an dem vorstehenden Bereich des ersten Endes des Artikeltragdecks (11,17) angeordnet sind.

13. System nach einem der Ansprüche 7 bis 12, dadurch gekennzeichnet, daß das zweite Ende eine Längendimension aufweist, die näherungsweise das 2 3/4 -fache des Durchmessers eines zu tragenden Artikels beträgt, daß der Abstand von dem ersten Ende zu dem zweiten Ende des Artikeltragdecks (11,17) näherungsweise das Zweifache des Durchmessers des zu tragenden Artikels beträgt, und daß der mittig angeordnete vorstehende Teil von dem ersten Ende des Artikeltragdecks (11,17) um einen Abstand vorsteht, der näherungsweise die Hälfte des Durchmessers des zu tragenden Artikels beträgt.

## Revendications

1. Palette pour le support d'articles cylindriques ou toroïdaux comprenant:
- une plate-forme (11, 17) destinée à supporter les articules et présentant une configuration plane avec des parois latérales opposées parallèles et des première et deuxième extrémités opposées, et
- des moyens (13, 14, 15, 16) fixés à et disposés en dessous de ladite plate-forme supportant les articles (11, 17) destinés à supporter celle-ci relativement à un plancher ou analogue, caractérisés en ce que ladite première extrémité de ladite plate-forme de support (11, 17) présente une portion en saillie (19) disposée au centre faisant saillie au-delà de ladite première extrémité et étant conçue pour supporter au moins partiellement un article,
- ladite deuxième extrémité de ladite plate-forme de support d'objets (11, 17) présente un évidemment disposé au centre, ledit évidement étant au moins aussi grand que ladite portion en saillie (19).

2. Palette selon la revendication 1, caractérisée en ce que ladite portion en saillie (19) disposée au centre présente des bords opposés (19a, 20a) qui convergent lorsqu'ils font saillie depuis ladite première extrémité.

3. Palette selon la revendication 1 ou 2, caractérisée en ce que ladite portion en saillie (19) disposée au centre se termine dans un plan cylindrique (20b).

4. Palette selon l'une des revendications 1 à 3, caractérisée en ce que ledite évidement disposé au centre diminue d'une largeur maximale à ladite deuxième extrémité de ladite plate-forme de support d'articles (11, 17) à une largeur minimale à l'intérieur de celle-ci.

5. Palette selon l'une des revendications 1 à 4, caractérisée en ce que des pièces de recouvrement renforçantes (19c) sont disposées sur la portion en saillie de ladite première extrémité de ladite plate-forme de support d'articles (11, 17).

6. Palette selon l'une des revendications 1 à 5, caractérisée en ce que ladite première extrémité a une dimension de longueur approchant deux et trois quarts de diamètre d'un article à supporter, la distance de ladite première extrémité à ladite deuxième extrémité de ladite plate-forme de support d'articles (11, 17) approchant deux diamètres de l'article à supporter, et ladite portion en saillie disposée au centre fait saillie depuis ladite première extrémité de ladite plate-forme de support d'articles (11, 17) d'une distance approximativement d'une moitié du diamètre de l'article à supporter.

7. Système pour le stockage d'articles cylindriques ou toroïdaux comprenant:
- au moins deux palettes de support d'articles (10), chacune desdites palettes (10) comprenant une plate-forme (11, 17) pour supporter les articles et ayant une configuration plane avec des parois latérales opposées parallèles et des première et deuxième extrémités opposées, et
- des moyens (13, 14, 14, 16) fixés à et disposés en-dessous de ladite plate-forme de support d'articles (11, 17) pour supporter celle-ci relativement à un plancher ou analogue,
- caractérisé en ce que chacune desdites palettes (10) présente une portion en saillie (19) disposée au centre à la première extrémité de la plate-forme de support d'articles (11, 17), ladite portion en saillie (19) faisant saillie au-delà de la première extrémité et étant conçue pour supporter au moins partiellement un article, et
- l'évidement disposé au centre à la deuxième extrémité de la plate-forme de support d'articles pour recevoir la portion en saillie (19) d'une palette adjacente (10).

8. Système selon la revendication 7, caractérisé en ce qu'il comprend au moins deux jeux de palettes dont la dimension est graduée de la plus petite à la plus grande et en ce qu'un jeu suivant de palettes (10) a une dimension plane environ 15 % plus grande que le jeu de palettes (10) précédent.

9. Système selon la revendication 7, caractérisé en ce que ladite portion en saillie (19) disposée au centre présente des bords latéraux opposés (19a, 20a) qui convergent au fur et à mesure qu'ils font saillie depuis ladite première extrémité.

10. Système selon la revendication 7 ou 8, caractérisé en ce que ladite portion en saillie (19) disposée au centre se termine dans un plan cylindrique (20b).

11. Système selon l'une des revendications 7 à 10, caractérisé en ce que ledit évidement disposé au centre diminue d'une largeur maximale à ladite deuxième extrémité de ladite plate-forme de support d'articles (11, 17) à une largeur minimale à l'intérieur de celle-ci.

12. Système selon l'une des revendications 7 à 11, caractérisé en ce que les pièces de recouvrement renforçantes (19c) sont disposées sur la portion en saillie de ladite première extrémité de ladite plate-forme de support d'articles (11, 17).

13. Système selon l'une des revendications 7 à 12, caractérisé en ce que ladite deuxième extrémité a une dimension de longueur approchant deux et trois quarts de diamètre d'un article à supporter, la distance de ladite première extrémité à ladite deuxième extrémité de ladite plate-forme de support d'articles (11, 17) approchant deux diamètres de l'article à supporter, et ladite portion en saillie disposée au centre fait saillie à partir de ladite première extrémité de ladite plate-forme de support d'articles (11, 17) d'une distance approximativement d'une moitié de diamètre de l'article à supporter.
